# EUROPÄISCHE PATENTSCHRIFT

(11) **EP 0 977 160 B1**
(45) Veröffentlichungstag und Bekanntmachung des Hinweises auf die Patenterteilung: **25.01.2006**
(21) Anmeldenummer: 99202405.9
(22) Anmeldetag: 21.07.1999
(51) Int. Cl.: G07F 7/10, G06F 11/28

(54) **Verfahren und Datenverarbeitungsanordnung zum gesicherten Ausführen von Befehlen**
Method and data processing device for the reliable execution of instructions
Méthode et dispositif de traitment de données pour l'exécution fiable des instructions

(30) Priorität: 31.07.1998 DE 19834486
(43) Veröffentlichungstag der Anmeldung: 02.02.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Rabeler, Thorwald, Philips Corp. Int. Proper. GmbH, 22335 Hamburg (DE)
(74) Vertreter: Peters, Carl Heinrich

(56) Entgegenhaltungen:
- EP-A- 0 475 837
- FR-A- 2 757 979
- US-A- 4 108 359
- US-A- 5 442 645
- J. OHLSSON ET AL.: "Implicit Signature Generation" FAULT TOLERANT COMPUTING SYMPOSIUM, 27. Juni 1995 (1995-06-27), Seiten 218-217, XP000597794 Los Alamitos, USA

## Beschreibung

Die Erfindung betrifft ein Verfahren sowie eine Datenverarbeitungsanordnung zum Ausführen von Folgen von Befehlen.

Bei der Ausführung von Folgen von Befehlen können Fehler auftreten, beispielsweise durch elektrische Störsignale oder defekte Bauelemente, wodurch die Befehle nicht mehr in der vorgesehenen Reihenfolge durchlaufen werden, wodurch der weitere Ablauf dauerhaft gestört ist.

Es gibt jedoch auch andere Fälle, bei denen die Befehle eines Programms nicht in der vorgesehen Folge durchlaufen werden. Diese Fälle betreten beispielsweise sogenannte Smartcards, bei denen in einer flachen Karte eine Datenverarbeitungsanordnung in Form eines Mikroprozessors sowie ein Speicher enthalten ist und die keine eigene Energiequelle enthalten, sondern über Kontakte oder kontaktlos über ein Lesegerät betrieben werden. Solche Smartcards werden für Bankanwendungen eingesetzt, wobei Daten im Speicher nur unter bestimmten Bedingungen gelesen und nur auf genau vorbestimmte Weise verändert werden dürfen und bestimmte andere Daten überhaupt nicht nach außen abgegeben werden dürfen. Solche sicherheitsrelevanten Daten können auch bei anderen Anwendungen von Smartcards vorhanden sein, beispielsweise beim Einsatz als Krankenkassenkarte. Das in diesen Karten vorhandene Programm kann bei vielen Smartcards verändert oder ergänzt werden, um die Smartcard an verschiedene Anwendungen anzupassen oder weitere Anwendungsmöglichkeiten hinzuzufügen. Solche Änderungen bzw. Ergänzungen sollen nur durch den Ausgeber der Karten erfolgen, jedoch ist es praktisch nicht auszuschließen, daß unberechtigte Personen die in dem Milaopozessor bzw. dessen Programmspeicher enthaltenen Befehlsfolgen verändern, um unerlaubt Daten auslesen oder betrügerisch Daten verändern zu können.

Aus der EP-A-475837 ist ein Verfahren zur Verwaltung eines in einem Mikroschaltungs-Datenträger geladenen Anwenderprogramms mit den folgenden Schritten bekannt. Zum Laden des Anwenderprogramms wird eine chiffrierte Signatur gebildet, die von einem geheimen Code der Mikroschaltung und von bestimmten Befehlen des Programms abhängt. Diese Signatur wird in einen programmierbaren Speicher der Mikroschaltung geladen, wohingegen das Programm in einen Programmspeicher der Mikroschaltung geladen wird.

Wenn das Anwenderprogramm ausgeführt werden soll, läßt man durch den Mikroprozessor der Mikroschaltung vor der Ausführung des Anwenderprogramms eine weitere chiffrierte Signatur bilden. Diese Signatur wird verglichen und der Ablauf des Programms wird in Abhängigkeit von dem Ergebnis dieses Vergleichs zugelassen.

Statt einer einzigen Prüfung am Anfang des Programms können nach der Lehre der EP-A-475837 regelmäßigere Prüfungen während des Ablaufs dieses Programms vorgesehen sein, beispielsweise nach der Ausführung von jeweils zehn Befehlen oder selbst unter der Anleitung des Lesegeräts, das die Verwendung des Programms bewirkt.

Aufgabe der Erfindung ist es, ein Verfahren sowie eine Datenverarbeitungsanordnung anzugeben, bei der jeder unerlaubte Veränderung oder Ergänzung von Befehlen erkennbar ist.

Diese Aufgabe ist durch die Gegenstände der Ansprüche 1 und 3 gelöst.

Diese Aufgabe wird im wesentlichen durch die Verwendung einer Signatur gelöst, die aus wenigstens einigen Befehlen aus einer Folge und/oder den Adressen dieser Befehle gebildet wird und die an bestimmten Stellen der Folge von Befehlen mit vorgegebenen Werten verglichen wird. Das Vergleichsergebnis beeinflußt oder bestimmt den weiteren Ablauf der Befehlsfolge, beispielsweise wird bei Nichtübereinstimmung eine Abbruch-Befehlsfolge durchlaufen und jede weitere Verarbeitung blockiert. Für die Erzeugung einer Signatur, vorzugsweise mit einem Signaturregister, aus einer Folge von zugeführten Werten gibt es sehr viele Möglichkeiten, die bei einem Signaturregister durch dessen speziellen Aufbau bestimmt sind, und diese sind nur dem Herausgeber der Karten bekannt. Ein unbefugter Benutzer, der ein Programm verändert oder ergänzt, erzeugt dadurch eine andere Signatur, die er jedoch nicht kennt, so daß er die Vergleichswerte für die Signatur an den vorgegebenen Stellen der Befehlsfolge nicht so verändern kann, daß eine Übereinstimmung erzeugt wird, die eine weitere Verarbeitung ermöglicht. Auf diese Weise wird eine äußerst hohe Sicherheit gegen Verfälschung oder unberechigte Ergänzung von Programmen erreicht.

Der Vergleich der Signatur mit vorgegebenen Werten wird zweckmäßig durch vorgegebene Befehle ausgelöst und durchgeführt. Derartige Befehle sind beispielsweise Sprungbefehle, die für einen sinnvollen Ablauf von Befehlsfolgen nicht weggelassen bzw. gelöscht werden können, so daß ein unbefugter Benutzer den Vergleich der Signatur nicht vermeiden kann.

Um die Sicherheit noch weiter zu erhöhen, ist es zweckmäßig, erfindungsgemäß die Signatur bei wenigstens einigen Vergleichen durch eine Verschlüsselung nach einem vorgegebenen geheimen Algorithmus zu verändern. Dadurch ist es für einen unbefugten Benutzer noch schwieriger, bei einer Änderung der Befehlsfolge die richtigen Vergleichswerte für die Signatur zu ermitteln. Dabei kann es zweckmäßig sein, nach einer Abfrage und einem Vergleich der Signatur diese danach mit dem verschlüsselten Wert wieder beginnen zu lassen.

Wie bereits erwähnt, ist eine Smartcard immer nur mit einem zugehörigen Lesegerät betreibbar, das ebenfalls eine Datenverarbeitungsanordnung enthält. Bei der Kommunikation der Karte mit dem Lesegerät ist es zweckmäßig, daß die Werte der Signaturen oder ihrer Verschlüsselungen in das Protokoll der Kommunikation einbezogen werden, so daß sich eine gemeinsame Signatur bei der Kommunikationspartner bezüglich der kommunizierenden Programme und der Folge der Befehle ergibt. Z.B. kann die Karte die Signatur an das Lesegerät übertragen, und darin wird diese Signatur, ggf. nach einer Verschlüsselung oder Entschlüsselung, als Anfangswert einer darin gebildeten Signatur verwendet werden, und nach einer vorgegebenen Befehlsfolge wird die dann gebildete Signatur wieder zur Karte übertragen. Auf diese Weise überwachen sich dann zusätzlich Karte und Lesegerät gegenseitig, ob sie unverfälscht sind.

In der deutschen Patentanmeldung 198 04 784.3 (PHD 98-010) ist eine Smartcard vorgeschlagen worden, die bereits eine hohe Sicherheit gegenüber Manipulationen aufweist. Dafür ist das gesamte Programm in im wesentlichen zwei Befehlsfolgen aufgeteilt, von denen die eine Befehlsfolge unveränderlich gespeichert ist. Alle Zugriffe auf wesentliche, insbesondere sicherheitsrelevante Daten sind nur in der einen Befehlsfolge möglich, die mit Systemprogramm bezeichnet ist, während die andere Befehlsfolge als Anwenderprogramm bezeichnet wird. Beide Befehlsfolgen bzw. Programme bestehen selbstverständlich ihrerseits je aus einer Anzahl von einzelnen Befehlsfolgen. Wenn im Anwenderprogramm auf bestimmte, insbesondere sicherheitsrelevante Daten zugegriffen werden soll, muß hierfür ein Sprung in das Systemprogramm erfolgen. Für eine solche Ausführung ist es zweckmäßig, daß der Vergleich der Signatur mit vorgegebenen Werten vorzugsweise nach jedem Sprung in das Systemprogramm erfolgt. Dadurch erfolgt eine besonders sichere zwangsweise Überprüfung der Signatur, die durch einen unbefugten Benutzer oder Betrüger nicht vermieden werden kann.

Die erfindungsgemäße Lösung umfaßt ferner eine Datenverarbeitungsanordnung zur Durchführung des beschriebenen Verfahrens, wie in den weiteren Ansprüchen angegeben ist.

Ausführungsbeispiele der Erfindung werden nachfolgend anhand der Zeichnung näher erläutert. Es zeigen:
- Fig. 1: Ein schematisches Blockschaltbild einer erfindungsgemäßen Datenverarbeitungsanordnung,
- Fig. 2: ein schematisches Flußdiagramm für die Ausführung von Folgen von Befehlen.

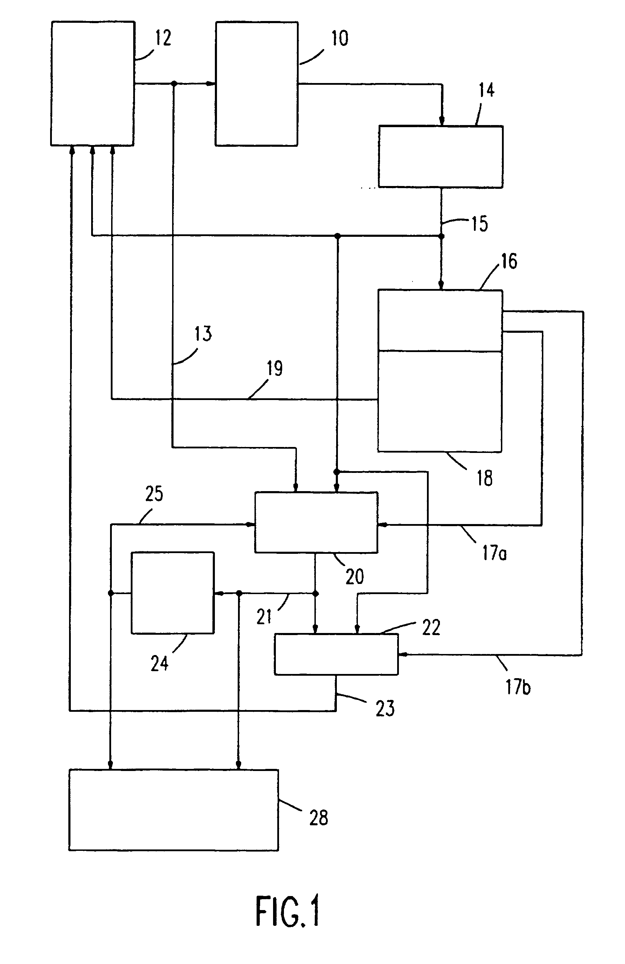

Die Fig. 1 zeigt ein Blockschaltbild einer erfindungsgemäßen Datenverarbeitungsanordnung. Ein Speicher 10 enthält Folgen von Befehlen, die durch einen Adressengenerator 12 adressiert und nacheinander ausgelesen werden. Die ausgelesenen Befehle werden einem Befehlsregister 14 zugeführt, das jeweils wenigstens einen Befehl aufnimmt. Dieser Befehl, oder zumindest Teile davon, werden über die Leitung 15 verschiedenen Elementen zugeführt.

Eines dieser Elemente ist ein Befehlsdekoder 16, der insbesondere den Operationsteil des Befehls entschlüsselt und Signale auf entsprechenden Steuerleitungen an andere Elemente weiterleitet, die hier allgemein als Ausführungsanordnung 18 dargestellt ist, die insbesondere eine ALU sowie Register enthält.

Eine Verbindung 19 von der Ausführungsanordnung 18 zum Adressengenerator 12 ist dargestellt, die Steuersignale überträgt, wenn eine Befehlsausführung abgeschlossen und der nächste Befehl aufgerufen werden soll oder wenn z.B. abhängig von einem momentanen Befehl oder von einem Zustand der Ausführungsanordnung 18 bei einem Befehl der Adressengenerator 12 auf eine neue Adresse gesetzt werden soll, die vorzugsweise von einem Teil des im Befehlsregister 14 enthaltenen Befehl über die Leitung 15 angegeben ist. Dadurch wird dann ein Sprung in der Befehlsfolge ausgelöst.

Die Leitung 15 ist bei einer Ausführung auch mit einem Eingang eines Signaturregisters 20 verbunden. Dieses Signaturregister 20 ist ferner über eine Leitung 13 mit dem Ausgang des Adressengenerators 12 verbunden. Bei anderen Ausführungen kann auch nur eine dieser beiden Leitungen auf das Signaturregister 20 führen. Das Signaturregister 20 verknüpft jeden neu zugeführten Wert mit dem im Register enthaltenen Wert und speichert diese Verknüpfung im Register ab, wenn es über die Leitung 17a ein entsprechendes Signal vom Befehlsdekoder 16 erhält.

Der Ausgang 21 des Signaturregisters 20 führt auf einen Eingang eines Vergleichers 22, von dem ein zweiter Eingang hier mit der Leitung 15 verbunden ist. Dieser Vergleicher 22 vergleicht also den vom Signaturregister 20 auf der Leitung 21 abgegebenen Wert mit einem in einem Befehl enthaltenen Wert, wenn über die Leitung 17b ein entsprechendes Signal von dem Befehlsdekoder 16 zugeführt wird. Wenn dieser Vergleich negativ ausfällt, d.h. die beiden Werte stimmen nicht überein, gibt der Vergleicher 22 über die Leitung 23 einen Wert und ein Steuersignal an den Adressengenerator 12 ab, der diesen auf eine bestimmte Adresse setzt, so daß dann eine vorgegebene Befehlsfolge durchlaufen wird. Dies ist beispielsweise eine Abbruch-Befehlsfolge, die weitere Funktionen der Anordnung blockiert.

Der Ausgang 21 des Signaturregisters 20 führt ferner auf eine Verschlüsselungsanordnung 24, die aus dem am Signaturregister 20 abgegebenen Wert nach einem geheimen Algorithmus einen neuen Wert erzeugt. Dieser neue Wert wird einem Eingang des Signaturregisters 20 zugeführt und bei einem entsprechenden Steuersignal auf der Leitung 17 darin eingeschrieben. Damit beginnt das Signaturregister 20 die weitere Signaturbildung von einem Wert ausgehend, der für eine Person, die den Verschlüsselungs-Algorithmus in der Einheit 24 nicht kennt, nicht vorhersehen kann. Dadurch ist es nicht möglich, den Wert, den ein entsprechender Befehl dem Vergleicher 22 zuführt, so zu verändern, daß bei einer Änderung der vorhergehenden Befehlsfolge der Vergleicher 23 kein Signal bzw. keinen Sprung in eine Abbruch-Befehlsfolge ausführt. Somit kann überprüft werden, ob die Befehlsfolgen und die Befehle in diesen Befehlsfolgen in der richtigen Ordnung durchlaufen werden und ob Befehle darin verändert worden sind.

Wenn die in Fig. 1 dargestellte Anordnung die Steueranordnung einer Smartcard ist, die in der bereits erwähnten deutschen Patentanmeldung 198 04 784.3 beschrieben ist, wird das Steuersignal auf der Leitung 17b, das den Vergleicher 22 aktiviert, vorzugsweise bei jedem Sprungbefehl erzeugt, mit dem ein Sprung in das dort beschriebene Systemprogramm ausgeführt wird, und gleichzeitig wird das Signaturregister gestoppt. Dieses Systemprogramm ist in einem Teil des Speichers 10 enthalten, der nicht von außen änderbar ist. Erst bei einem Rücksprung in das Anwenderprogramm wird das Signaturregister 20 wieder freigegeben. Dabei kann in das Signaturregister 20 der von der Verschlüsselungseinheit 24 abgegebene Wert eingeschrieben werden.

Da Smartcards keine eigene Energiequelle enthalten, können sie nur arbeiten, wenn sie mit einem Kartenleser zusammenarbeiten. Ein solcher ist in Fig. 1 symbolisch mit dem Block 28 angedeutet. Dieser Kartenleser 28 empfängt, beispielsweise wenn das Programm in der Smartcard einen Sprung ausführt, den Wert am Ausgang 21 des Signaturregisters 20 oder den von der Verschlüsselungseinheit 24 verschlüsselten Wert. Dann kann dieser Wert in dem Kartenleser 28 mit einem vorgegebenen Wert verglichen werden. In diesem Fall könnte der Vergleicher 22 weggelassen werden, wenn der Kartenleser 28 die Smartcard entsprechend steuern kann. Eine andere Möglichkeit ist, daß der Kartenleser 28 aus diesem empfangenen Wert eine weitere Signatur bildet, und diese anders Signaturregister 20 zurücksendet. Dadurch kann dann die Smartcard prüfen, ob sie mit einem richtigen, insbesondere nicht manipuliertem Kartenleser zusammenarbeitet.

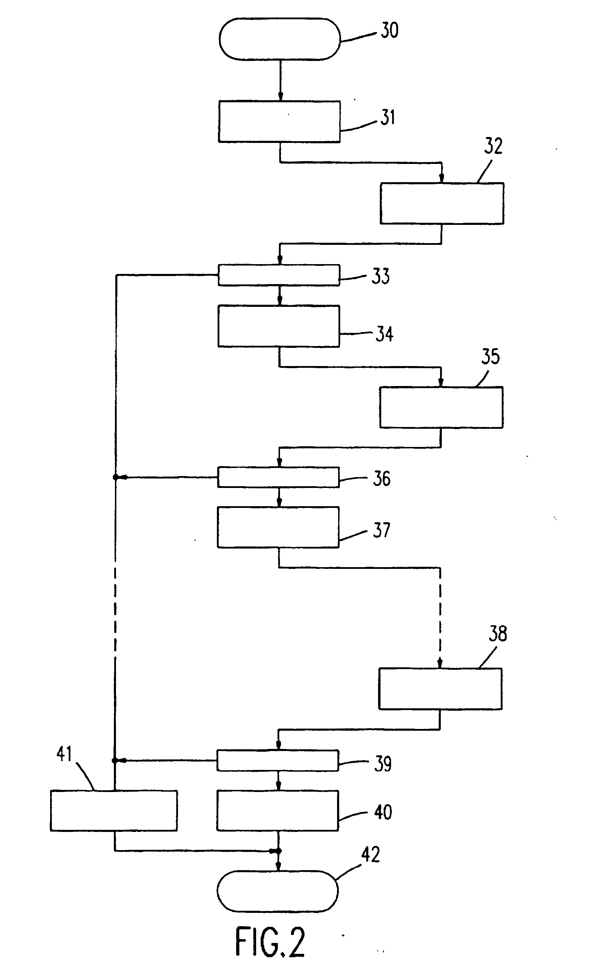

Die Fig. 2 zeigt ein schematisches Flußdiagramm eines Ablaufs von Befehlsfolgen, der der bereits erwähnten deutschen Patentanmeldung 198 04 784.3 entspricht.

Der Ablauf beginnt mit dem Start 30, der das Einführen der Smartcard in den Kartenleser für eine Kontaktverbindung oder eine kontaktlose Verbindung symbolisiert. Danach folgt ein Startprogramm 31, bei dem die Karte und der Kartenleser verschiedene Daten austauschen, um beispielsweise festzustellen, welcher Art die Karte ist, ob Berechtigungsprüfungen durchzuführen sind usw.. Danach geht die Verarbeitung über auf eine Programmfolge 32, die einen Teil eines Anwenderprogramms ist.

An einer vorgegebenen Stelle der Programmfolge 32 ist ein Sprungbefehl in das Systemprogramm enthalten. Damit geht der Ablauf auf eine Folge 33 von Systembefehlen über, bei denen die Signatur geprüft wird, die vorher während der Verarbeitung der Befehlsfolge 32 erzeugt wurde. Danach folgen weitere vorgegebene Systembefehle 34, und danach erfolgt ein Rücksprung in das Anwenderprogramm, wobei nun wieder neue Signaturen gebildet werden. An einer bestimmten Stelle der Befehlsfolge 35 oder bei Erfüllung einer bestimmten Bedingung erfolgt wieder ein Sprung in das Systemprogramm, wobei durch Systembefehle 36 wieder die gebildete Signatur geprüft wird. Zusätzlich kann in den Befehlen 36 die Erzeugung eines neuen Anfangswerts enthalten sein, im einfachsten Fall eine Löschung des Signarurregisters, aber auch das Einschreiben einer Verschlüsselung der vorher gebildeten Signatur kann vorgesehen sein. Danach folgen wieder weitere Befehle 37 des Systemprogramms.

Dieser Ablauf wiederholt sich mehrmals, bis schließlich mit der Befehlsfolge 38 des Anwenderprogramms die gewünschte Operation mit der Karte durchgeführt ist. Mit diesem Abschluß geht das Programm wieder durch einen Sprungbefehl in das Systemprogramm, wo mit den Systembefehlen 39 die Signatur am Ausgang des Signaturregisters geprüft wird. Es folgen noch einige abschließende Befehle 40 des Systemprogramms, bis das Programm schließlich beendet und die Karte wieder ausgegeben wird, was mit 42 gekennzeichnet ist.

Wenn bei den Prüfungen des Wertes des Signaturregisters mit den Befehlen 33,36 und 39 festgestellt wird, daß der vorgegebene Wert nicht vorhanden ist, erfolgt ein Sprung in ein Abbruchprogramm 41, das jede weitere externe Operation der Karte blockiert und direkt zum Ende 42 führt.

## Patentansprüche

1. Verfahren zum Ausführen eines aus einer Folge von Befehlen bestehenden Programms in einer Datenverarbeitungsanordnung, wobei
• den Befehlen Adressen zugeordnet sind, die entsprechende Folgen bilden,
• aus wenigstens einem Teil der Folgen von Befehlen und/oder Folgen von Adressen durch aufeinanderfolgende Signaturbildung Werte gebildet werden, die an vorgegebenen Stellen der Folgen von Befehlen mit vorgegebenen Werten verglichen werden,
• das Vergleichsergebnis die weiteren Folgen der Befehle beeinflußt,
• der Vergleich durch vorgegebene Befehle ausgelöst und ausgeführt wird,
**dadurch gekennzeichnet, daß** die Signatur bei wenigstens einigen Vergleichen durch eine Verschlüsselung nach einem vorgegebenen geheimen Algorithmus verändert wird.

2. Verfahren nach Anspruch 1,
**dadurch gekennzeichnet, daß** wenigstens einige Vergleiche der Werte der Signatur mit vorgegebenen Werten in einer weiteren Datenverarbeitungsanordnung die mit der Datenverarbeitungsanordnung zeitweise verbunden ist, durchgeführt werden.

3. Datenverarbeitungsanordnung mit einem Befehlsregister (14) zum Aufnehmen von nacheinander aus einem Speicher (10) ausgelesenen Befehlen, von denen wenigstens einige einen Operationscode enthalten, mit einem Adressengenerator (12) zum Ansteuern des Speichers und mit Elementen (16), (18) zum Ausführen der in den Operationscodes der Befehle angegebenen Operationen,
**dadurch gekennzeichnet, daß** ein Signaturregister (20) vorgesehen ist, von dem ein Eingang mit dem Adressengenerator (12) und/oder mit wenigstens dem den Operationscode aufnehmenden Teil des Befehlsregisters (14) verbunden ist und daß der vom Signaturregister (20) abgegebene Wert mittels vorgegebener Befehle innerhalb von Folgen von nacheinander ausgelesenen Befehlen in einem Vergleicher (22) mit vorgegebenen Werten verglichen wird und das Vergleichsergebnis die weiteren Folgen der nacheinander ausgelesenen Befehle beeinflußt.

4. Datenverarbeitungsanordnung nach Anspruch 3,
**dadurch gekennzeichnet, daß** die vorgegebenen Befehle Sprungbefehle sind.

5. Datenverarbeitungsanordnung nach Anspruch 3 oder 4,
**dadurch gekennzeichnet, daß** ein Ausgang des Signaturregisters (20) mit einer Verschlüsselungseinheit (24) verbunden ist.

6. Datenverarbeitungsanordnung nach Anspruch 5,
**dadurch gekennzeichnet, daß** ein Ausgang der Verschlüsselungseinheit (24) auf den Eingang des Signaturregisters (20) führt.

7. Datenverarbeitungsanordnung nach einem der Ansprüche 3 bis 6,
die mit einer weiteren Datenverarbeitungsanordnung koppelbar ist und nach Kopplung mit dieser zusammenarbeitet, indem die Datenverarbeitungsanordnung an die weitere Datenverarbeitungsanordnung Daten überträgt und von dieser Daten empfängt,
**dadurch gekennzeichnet, daß** die Datenverarbeitungsanordnung einen vom Wert des Signaturregisters (20) abgeleiteten Wert an die weitere Datenverarbeitungsanordnung (3) überträgt.

8. Datenverarbeitungsanordnung nach einem der Ansprüche 3 bis 7,
wobei im wesentlichen eine erste und eine zweite Befehlsfolge vorgesehen sind, von denen die erste Befehlsfolge unveränderlich festgelegt ist und die zweite Befehlsfolge änderbar ist und jeder in der zweiten Befehlsfolge ausgelöster Sprung eine Stelle in der ersten Befehlsfolge aufruft,
**dadurch gekennzeichnet, daß** der Vergleich des vom Signaturregister abgegebenen Werts wenigstens nach einem Sprung in die erste Befehlsfolge erfolgt.

## Claims

1. A method of executing a program consisting of a sequence of instructions in a data processing device, in which
• addresses forming corresponding sequences are assigned to the instructions,
• from at least a few of the sequences of instructions and/or sequences of addresses values are formed through successive signature formation, which values are compared with predetermined values at given positions in the sequence of instructions,
• the result of the comparison influences the further sequence of instructions,
• the comparison is triggered by predefined instructions and executed,
**characterized in that** the signature is modified, for at least some comparisons, by encryption in conformity with a predetermined secret algorithm.

2. A method as claimed in claim 1, **characterized in that** at least some comparisons of the values of the signature are made with predetermined values in a further data processing device which is occasionally connected to the data processing device.

3. A data processing device which includes an instruction register (14) for storing instructions which are successively read from a memory (10) and at least some of which contain an operation code, and also an address generator (12) for controlling the memory and elements (16, 18) for executing the operations specified in the operation codes of the instructions, **characterized in that** there is provided a signature register (20) an input of which is connected to the address generator (12) and/or to at least the part of the instruction register (14) receiving the operation code, and **in that** the value output by the signature register (20) is compared in a comparator (22) with specified values by way of specified instructions within sequences of successively read instructions, and **in that** the result of the comparison influences the further sequences of successively read instructions.

4. A data processing device as claimed in claim 3, **characterized in that** the specified instructions are jump instructions.

5. A data processing device as claimed in claim 3 or 4, **characterized in that** an output of the signature register (20) is connected to an encryption unit (24).

6. A data processing device as claimed in claim 5, **characterized in that** an output of the encryption unit (24) is connected to the input of the signature register (20).

7. A data processing device as claimed in one of the claims 3 to 6 which can be coupled to a further data processing device and co-operates therewith after coupling, in that the data processing device transfers data to and receives data from said further data processing device, **characterized in that** the data processing device transfers a value derived from the value of the signature register (20) to the further data processing device (3).

8. A data processing device as claimed in one of the claims 3 to 7, involving essentially a first and a second instruction sequence, the first instruction sequence being fixed so that it cannot be modified, whereas the second instruction sequence can be modified and each jump triggered in the second instruction sequence addresses a position in the first instruction sequence, **characterized in that** the comparison of the value output by the signature register takes place at least after a jump to the first instruction sequence.

## Revendications

1. Procédé d'exécution d'un programme composé d'une séquence d'instructions dans un dispositif de traitement de données, dans lequel
• des adresses qui forment des séquences correspondantes sont affectées aux instructions;
• des valeurs qui sont comparées aux valeurs préalablement déterminées à des endroits préalablement déterminés des séquences d'instructions sont formées à partir d'au moins une partie des séquences d'instructions et/ou des séquences d'adresses par la formation de signatures successives;
• le résultat de la comparaison influence les autres séquences des instructions;
• la comparaison est déclenchée et exécutée par des instructions préalablement déterminées,
**caractérisé en ce que** la signature est modifiée pour quelques comparaisons au moins par un codage selon un algorithme secret préalablement déterminé.

2. Procédé selon la revendication 1,
**caractérisé en ce qu'**au moins quelques comparaisons des valeurs de la signature avec des valeurs préalablement déterminées sont effectuées dans un dispositif de traitement de données supplémentaire qui est relié temporairement au dispositif de traitement de données.

3. Dispositif de traitement de données avec un registre d'instructions (14) pour l'enregistrement d'instructions lues successivement d'une mémoire (10) dont au moins certaines contiennent un code opératoire, avec un registre d'adresses (12) pour la commande de la mémoire et avec des éléments (16), (18) pour l'exécution des opérations indiquées dans les codes opératoires des instructions,
**caractérisé en ce qu'**il est prévu un registre de signatures (20) dont une entrée est reliée au générateur d'adresses (12) et/ou avec au moins une partie du registre d'instructions (14) enregistrant le code opératoire et que la valeur délivrée par le registre de signatures (20) à l'aide d'instructions préalablement déterminés dans le cadre de séquences d'instructions lues successivement est comparée dans un comparateur (22) avec des valeurs préalablement déterminées et que le résultat de la comparaison influence les autres séquences des instructions lues successivement.

4. Dispositif de traitement de données selon la revendication 3,
**caractérisé en ce que** les instructions préalablement déterminées sont des instructions de saut.

5. Dispositif de traitement de données selon l'une des revendications 3 ou 4,
**caractérisé en ce qu'**une sortie du registre de signatures (20) est reliée à une unité de codage (24).

6. Dispositif de traitement de données selon la revendication 5,
**caractérisé en ce qu'**une sortie de l'unité de codage (24) conduit à l'entrée du registre de signatures (20).

7. Dispositif de traitement de données selon l'une des revendications 3 à 6, qui peut être couplé à un dispositif de traitement de données supplémentaire et, après ce couplage, coopère avec celui-ci en transmettant des données au dispositif de traitement de données supplémentaire et reçoit des données de celui-ci,
**caractérisé en ce que** le dispositif de traitement de données transmet une valeur dérivée de la valeur du registre de signatures (20) au dispositif de traitement de données supplémentaire (3).

8. Dispositif de traitement de données selon l'une des revendications 3 à 7, dans lequel sont essentiellement prévues des première et deuxième séquences d'instructions dont la première séquence d'instructions est déterminée de manière invariable et la deuxième séquence d'instructions est variable et tout saut déclenché dans la deuxième séquence d'instructions appelle une position dans la première séquence d'instructions,
**caractérisé en ce que** la comparaison de la valeur délivrée par le registre de signatures est délivrée au moins après un saut dans la première séquence d'instructions.
